# EUROPÄISCHE PATENTSCHRIFT

(11) **EP 1 058 799 B1**
(45) Veröffentlichungstag und Bekanntmachung des Hinweises auf die Patenterteilung: **12.11.2003**
(21) Anmeldenummer: 99911698.1
(22) Anmeldetag: 23.02.1999
(51) Int. Cl.: F16L 37/084

(54) **LÖSBARE SCHNELLKUPPLUNG FÜR METALLEITUNGEN**
RELEASABLE QUICK COUPLING FOR METAL PIPES
ATTACHE RAPIDE DESTINEE A DES CONDUITS METALLIQUES

(30) Priorität: 05.03.1998 DE 19809313
(43) Veröffentlichungstag der Anmeldung: 13.12.2000
(73) Patentinhaber: A. Raymond & Cie, 38028 Grenoble (FR)
(72) Erfinder: MORETTI, Erminio, F-38000 Grenoble (FR); RAYMOND, Albert, F-38170 Seyssinet (FR); PERRIN, Gilles, F-38000 Grenoble (FR)
(74) Vertreter: Kirchgaesser, Johannes, Dipl.-Ing.
(86) Internationale Anmeldenummer: EP9901171
(87) Internationale Veröffentlichungsnummer: WO99045306

(56) Entgegenhaltungen:
- EP-A- 0 806 597
- WO-A-95/10002
- DE-A- 19 722 842
- DE-C- 4 300 037

## Beschreibung

Die Erfindung bezieht sich auf eine Verbindungseinheit einer lösbaren Schnellkupplung zum Anschluß an ein stufenweise erweitertes Ende einer Metallrohrleitung. Die Verbindungseinheit umfaßt einen zylindrischen Gehäusekopf mit einem Aufnahmeraum zum Einführen eines rohrförmigen Einsteckteils, das im Abstand vom Rohrende mit einer umlaufenden Halterippe versehen ist.

Die Verbindungseinheit umfaßt ferner ein separates Halteelement mit radial in den Aufnahmeraum gerichteten, elastisch auffederbaren Rastkanten zum Hintergreifen der Halterippe nach dem Einführen des Einsteckteils sowie eine am Gehäusekopf angeformte Anschlußhülse, welche zusammen mit sich am Einsteckteil dichtend anlegenden Dichtungsringen in das abgestufte Ende der Metallrohrleitung einführbar und dort verankerbar ist.

Das Einsteckteil kann hierbei das Ende eines stabilen Metallrohres sein, welches beispielsweise für Kraftstoffleitungen verwendet wird. Es kann aber auch aus starrem oder hartelastischem Kunststoff oder anderem gängigen Spritzgußmaterial bestehen, welches in bekannter Weise über einen Anschlußstutzen mit einer Schlauch- oder Rohrleitung verbindbar ist ( **DE 43 00 037 C1**).

Eine derartige Verbindungseinheit wird bei einer noch nicht zum Stand der Technik gehörenden, zweiteilig ausgebildeten Schnellkupplung ( DE - Anmeldung **197 22 842** ) verwendet, um das Aufnahmegehäuse gegenüber dem Grundkörper verdrehbar auszubilden. Das mit dem separaten Halteelement versehene Kopfteil weist hierbei ebenfalls eine Anschlußhülse auf, welche mit den Dichtungsringen vorweg in den rohrförmigen Einführbereich des Grundkörpers einführbar und verankerbar ist, wobei das Einführen der Dichtungsringe mit einem zusätzlichen Montageaufwand verbunden ist. Der Grundkörper ist bei dieser Kupplung - genau wie das zugehörige Kopfteil - aus Kunststoff hergestellt und an seinem entgegengesetzten Ende mit einem Rohrstutzen zum Anschluß an eine Schlauchleitung versehen. Sinn und Zweck dieser zweigeteilten Schnellkupplung ist allein die Verdrehbarkeit zwischen Kopfteil und Grundkörper. Das Dokument EP-A-806 597 offenbart eine Verbindungseinheit gemäß dem oberbegriff des Anspruchs 1.

Aufgabe der vorliegenden Erfindung ist es, die Verbindungseinheit so auszubilden, daß diese mit den Dichtungsringen zusammen an das stufenweise erweiterte Ende einer Metallrohrleitung anschließbar und mit diesem fest verankerbar ist, um auf diese Weise den Montageaüfwand für das Aufnahmeteil der Schnellkupplung möglichst niedrig zu halten.

Zur Lösung der gestellten Aufgabe sind am Gehäusekopf der Verbindungseinheit Rastmittel zum Verrasten der radial nach außen gebogenen Randkante des Metallrohrendes angeformt und die Dichtungsringe sind mittels einer Trägerhülse vor der Stimseite der Anschlußhülse positionierbar und werden zusammen mit der Anschlußhülse in das abgestufte Ende der Rohrleitung eingeschoben, während die Trägerhülse gleichzeitig über die Anschlußhülse nach rückwärts verschoben wird.

Durch die erfindungsgemäßen Maßnahmen wird auf einfache Weise erreicht, daß beim Zusammenbau der Schnellkupplung die Dichtungsringe zusammen mit der Verbindungseinheit montiert und die Anschlußhülse im Rohrende gleichzeitig zentriert verankert werden kann.

Weitere Merkmale zur Ausgestaltung der Erfindung sind in den Unteransprüchen enthalten, wobei im Anspruch 2 die geometrischen Randbedingungen für die Ausbildung der Trägerhülse im Bezug auf ein zweifach abgestuftes Rohrende angegeben sind.

Anspruch 3 beschreibt eine bevorzugte Ausführungsform der Trägerhülse und Anspruch 4 befaßt sich mit einer spritzgießtechnisch besonders einfachen Ausbildung der Rastmittel am Gehäusekopf.

In der Zeichnung ist ein Ausführungsbeispiel der erfindungsgemäßen Verbindungseinheit dargestellt, welches nachfolgend näher erläutert wird. Es zeigen
- **Fig. 1**: den Gehäusekopf der Verbindungseinheit im Längsschnitt gemäß Linie I - I in Figur 2,
- **Fig. 2**: die Seitenansicht hierzu in Richtung des Pfeiles A,
- **Fig. 3**: die Trägerhülse mit Dichtungsringen im Längsschnitt in der Position vor dem Aufschieben auf den Gehäusekopf nach Figur 1,
- **Fig. 4**: der Gehäusekopf mit aufgeschobener Trägerhülse in einem um 90° gedrehten Längsschnitt gemäß Linie IV - IV in Figur 5,
- **Fig. 5**: die Seitenansicht hierzu in Richtung des Pfeiles B,
- **Fig. 6**: die fertig montierte Verbindungseinheit im gleichen Längsschnitt wie in Figur 1 vor dem Einführen in das abgestufte Ende eines Metallrohres,
- **Fig. 7**: die Verbindungseinheit beim Einführen der Anschlußhülse in das Ende des Metallrohres,
- **Fig. 8**: die Verbindungseinheit nach vollständigem Einführen der Anschlußhülse in das Metallrohrende und Verrastung der Randkante und
- **Fig. 9**: die auf dem Metallrohrende verankerte Verbindungseinheit mit verkuppeltem Einsteckteil.

Die in den Figuren dargestellte Verbindungseinheit besteht aus einem zylindrischen Gehäusekopf 1 mit einem Aufnahmeraum 2 zum Einführen eines rohrförmigen Einsteckteils 3 und einer am Gehäusekopf 1 in axialer Richtung angeformten Anschlußhülse 4, welche in das abgestufte Ende 5 einer Metallrohrleitung 6 einführbar und in noch zu beschreibender Weise verankerbar bzw. verrastbar ist.

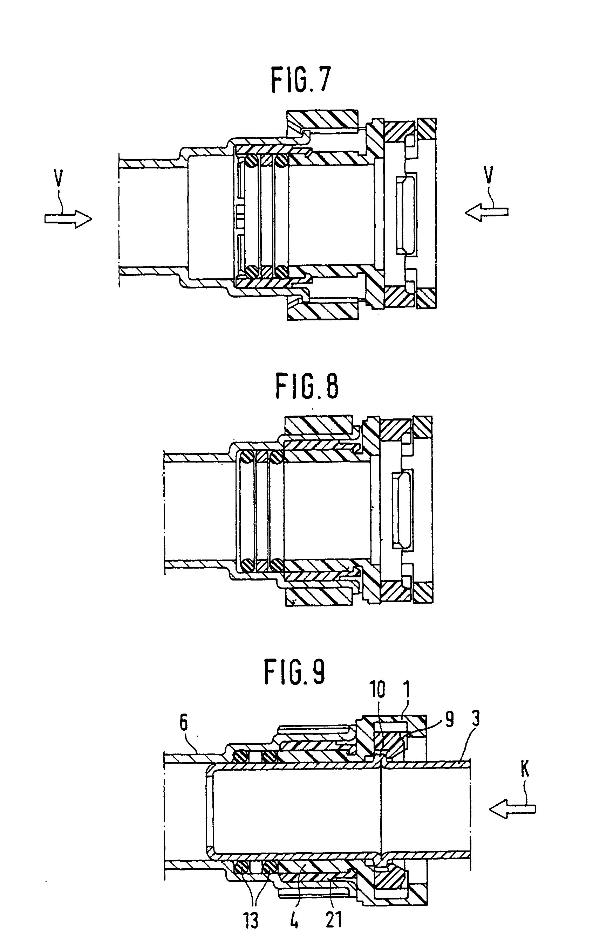

Im Gehäusekopf 1 befindet sich eine Aussparung 7, in welcher ein separates Halteelement 8 quer zur Achsrichtung eingebettet ist. Dieses Halteelement 8 ist mit zwei radial in den Aufnahmeraum 2 gerichteten, elastisch auffederbaren Rastkanten 9 versehen, welche dazu bestimmt sind, nach dem Einführen des Einsteckteils 3 die im Abstand vom Rohrende angeformte, umlaufende Halterippe 10 zu hintergreifen ( siehe Fig. 9 ). Das Halteelement 8 ist in der aus DE 43 00 037 C1 bekannten Weise so aufgebaut, daß die Rastkanten 9 über V-förmig zusammenlaufende Federstege 11 mit zwei diametral gegenüberliegenden Druckplatten 12 verbunden sind. Diese Druckplatten 12 sind in der Aussparung 7 des Gehäusekopfes 1 eingebettet und lassen sich von außen manuell zusammendrücken, um das Einsteckteil 3 im Bedarfsfalle herauslösen zu können. Um die Schnellkupplung gegen das durchfließende Medium abzudichten, sind zwei Dichtungsringe 13 vorgesehen, welche zusammen mit einem Zwischenring 14 vor der Stirnseite der Anschlußhülse 4 im abgestuften Ende 5 der Metallrohrleitung 6 angeordnet sind und sich am Außenmantel des Einsteckteils 3 und an der Innenwand der Rohrleitung 6 dichtend anlegen.

Das die Verbindungseinheit aufnehmende Ende 5 der Metallrohrleitung 6 weist zwei nach außen abgesetzte Rohrstufen 15 und 16 auf und besitzt eine radial nach außen gebogene Randkante 17, welche beim Einführen der Verbindungseinheit in das abgestufte Rohrende 5 mit dem Gehäusekopf 1 verrastbar sind. Zu diesem Zweck sind am Gehäusekopf 1 konzentrisch zur Anschlußhülse 4 zwei diametral gegenüberliegende Wandschalen 18 angeformt, deren Innendurchmesser Hi gleich dem Außendurchmesser Da der Randkanten 17 ist. An den Wandschalen 18 wiederum sind ebenfalls gegenüberliegend nach innen abstehende, verdickte Wandschalen 19 angeformt, deren Innendurchmesser Si kleiner als der Außendurchmesser Da der Randkante 17 ist.

Die Wandschalen 19 weisen an der Vorderseite konisch abgeschrägte Einführflächen 20 auf und enden kurz vor dem Gehäusekopf 1 mit einem Spalt 28, dessen Breite S etwas größer ist als die Dicke d der Randkante 17. Die Wandschalen 18 sind auf der Breite der Wandschalen 19 zum Gehäusekopf 1 hin unterbrochen, so daß die Wandschalen 19 beim Einführen der Randkante 17 um den Betrag f nach außen federn können, bis die Randkante 17 den Engpaß passiert hat und in den Spalt 28 eintauchen kann. Sodann federn die Wandschalen 19 wieder in die Ausgangslage zurück und die Verbindungseinheit ist fest mit dem Rohrende 5 verbunden.

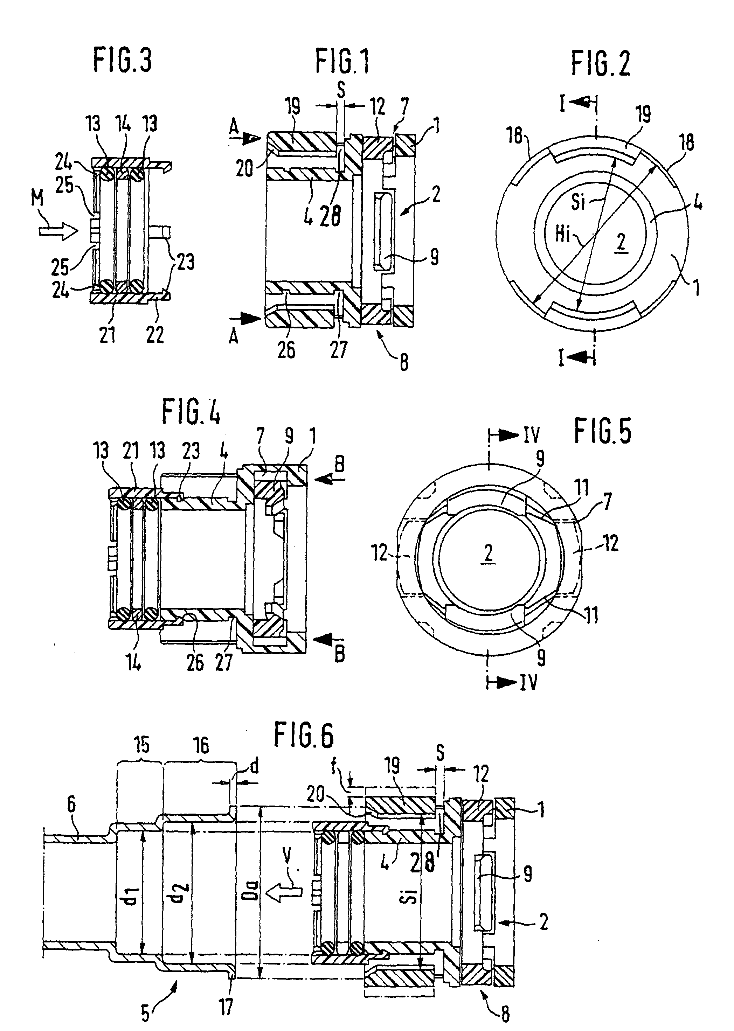

Zur Erleichterung des Zusammenbaus sind die beiden Dichtungsringe 13 und der Zwischenring 14, wie aus Figur 3 ersichtlich, zunächst in einer Trägerhülse 21 untergebracht, deren Innendurchmesser dem Außendurchmesser der Anschlußhülse 4 entspricht und die an der der Verbindungseinheit zugekehrten Seite mindestens zwei diametral gegenüberliegende Raststege 22 aufweist. An den freien Enden der Raststege 22 sind in Aufsteckrichtung des Pfeiles M abgeschrägte, nach innen gerichtete Rasthaken 23 angeformt, welche zum Positionieren der Trägerhülse vor der Stirnseite der Anschlußhülse 4 in entsprechende Kerben 26 an der Außenwand der Anschlußhülse 4 einrastbar sind.

Die Trägerhülse 21 weist ferner an ihrer entgegengesetzten Stirnseite mehrere über den Rand verteilte, nach innen abstehende Wülste 24 auf, welche die in der Trägerhülse 21 eingebettete Dichtungsringe 13 an ihrem Platz halten. Andererseits sind diese Wülste 24 zum Rand hin nach innen abgeschrägt und seitlich von kurzen Schlitzen 25 umgeben, so daß die Wülste 24 leicht nach außen auffedern können.

Nachdem die Trägerhülse 21 entsprechend der Darstellung in Figur 4 auf die Anschlußhülse 4 aufgeschoben und durch Einrasten der Rasthaken 23 in die Kerben 26 positioniert worden ist, gestaltet sich der Einbau der Verbindungseinheit im abgestuften Ende 5 der Rohrleitung 6 wie in der Montagefolge gemäß Figur 6 bis 8 dargestellt.

Zunächst wird die Verbindungseinheit mit der Trägerhülse 21 vorweg in Richtung des Pfeiles V in die vordere Rohrstufe 16 eingeschoben, bis die Trägerhülse 21 am Ende der Rohrstufe 16 anstößt ( Figur 7 ). Hierbei schiebt sich die Randkante 17 über die Einführschräge 20 zwischen die Wandschalen 19 und drückt diese in die in Figur 6 strichpunktierte Lage entsprechend dem Betrag f auseinander.

Sodann wird die Verbindungseinheit weiter in Richtung des Pfeiles V in das Rohrende 5 eingeschoben, wobei die Dichtungsringe 13 zusammen mit dem Zwischenring 14 in die hintere Rohrstufe 15 eingeführt und die Trägerhülse 21 gleichzeitig über die Anschlußhülse 4 zurückgeschoben wird, bis die Rasthaken 23 in der umlaufenden Rille 27 am Ende der Anschlußhülse 4 eintauchen können. Währenddessen schiebt sich die Randkante 17 weiter durch die aufgefederten Wandschalen 19, bis sie im Spalt 28 einrasten und die Wandschalen 19 wieder in ihre Ursprungslage zurückfedern können.

Nun ist die Verbindungseinheit über die Trägerhülse 21 im Rohrende 5 zentriert gehalten, während die Dichtungsringe 13 in der inneren Rohrstufe 15 für einen dichtenden Abschluß sorgen, wenn das Einsteckteil 3 in die Verbindungseinheit in Richtung des Pfeiles K eingeführt ist ( Figur 9 ).

## Patentansprüche

1. Verbindungseinheit einer lösbaren Schnellkupplung zum Anschluß an das stufenweise erweiterte Ende einer Metallrohrleitung, umfassend einen zylindrischen Gehäusekopf ( 1 ) mit einem Aufnahmeraum ( 2) zum Einführen eines rohrförmigen Einsteckteils ( 3 ), das im Abstand vom Rohrende mit einer umlaufenden Halterippe ( 10 ) versehen ist, ein separates Halteelement ( 8 ) mit radial in den Aufnahmeraum ( 2 ) gerichteten, elastisch auffederbaren Rastkanten ( 9) zum Hintergreifen der Halterippe ( 10 ) nach dem Einführen des Einsteckteils ( 3 ) sowie eine am Gehäusekopf ( 1 ) angeformte Anschlußhülse ( 4 ), welche zusammen mit sich am Einsteckteil ( 3 ) dichtend anlegenden Dichtungsringen ( 13 ) in das abgestufte Ende der Metallrohrleitung ( 6 ) einführbar und verankerbar ist, wobei am Gehäusekopf ( 1 ) Rastmittel (18,19) zum Verrasten einer radial nach außen gebogenen Randkante ( 17 ) des Metallrohrendes ( 5 ) angeformt sind, **dadurch gekennzeichnet daß** die Dichtungsringe ( 13 ) mittels einer Trägerhülse ( 21 ) vor der Stirnseite der Anschlußhülse ( 4 ) positionierbar und beim Einführen der Anschlußhülse ( 4 ) in das abgestufte Ende ( 5 ) der Rohrleitung ( 6 ) einführbar sind, während die Trägerhülse ( 21 ) gleichzeitig über die Anschlußhülse ( 4 ) verschiebbar ist.

2. Verbindungseinheit nach Anspruch 1, mit einem stufenweise erweiterten Ende einer Metallrohrleitung wobei das Rohrende zwei nach außen abgesetzte Rohrstufen ( 15 u. 16 ) aufweist, **dadurch gekennzeichnet, daß** der Außendurchmesser der Dichtungsringe ( 13 ) dem Innendurchmesser (d1) der innenliegenden Rohrstufe ( 15 ) und der Außendurchmesser der Trägerhülse ( 21 ) dem Innendurchmesser d2 der erweiterten, vorderen Rohrstufe ( 16) entsprechen, und daß ferner die axiale Erstreckung des Dichtungspakets der inneren Rohrstufe ( 15 ) und die Länge der Trägerhülse ( 21 ) der Tiefe der vorderen Rohrstufe ( 16 ) entspricht.

3. Verbindungseinheit nach Anspruch 2, **dadurch gekennzeichnet, daß** die Trägerhülse ( 21 ) mindestens zwei diametral gegenüberliegende Raststege ( 22 ) besitzt, an deren freien Enden in Aufsteckrichtung abgeschrägte, nach innen gerichtete Rasthaken ( 23 ) angeformt sind, welche beim Positionieren der Trägerhülse ( 21 ) auf der Anschlußhülse ( 4 ) in entsprechend große Kerben ( 26 ) an der Außenwand der Anschlußhülse ( 4 ) einrasten und beim Einführen der Anschlußhülse ( 4 ) in das abgestufte Ende ( 5 ) der Rohrleitung ( 6 ) über die Außenwand bis zum hinteren Gehäusekopf ( 1 ) zurückgleitet und dort in eine entsprechende umlaufende Rille ( 27 ) eintauchen.

4. Verbindungseinheit nach einem der Ansprüche 1 bis 3, **dadurch gekennzeichnet, daß** die am Gehäusekopf ( 4 ) angeformten Rastmittel aus zwei einander gegenüberliegenden Wandschalen ( 18 ) bestehen, deren Innendurchmesser (Hi) gleich dem Außendurchmesser (Da) der Randkanten ( 17 ) ist, und daß in den Wandschalen ( 18) nach innen abstehende, an der Einführseite abgeschrägte Wandschalen ( 19) angeformt sind, deren Innendurchmesser (Si) kleiner ist als der Außendurchmesser (Da) der Randkanten ( 17 ) und welche kurz vor dem Gehäusekopf ( 1 ) mit einem Spalt ( 28 ) enden, dessen Breite ( S ) etwas größer ist als die Dicke (d) der Randkante (17).

## Claims

1. Connection unit for a releasable quick coupling for connection to the end, expanded in stages, of a metal pipeline, comprising a cylindrical housing head (1) with a receiving area (2) for the insertion of a tubular plug-in part (3) that is provided with an encircling retaining rib (10) at a distance from the pipe end, a separate retaining element (8) with elastically expandable detent edges (9), radially directed into the receiving area (2), to engage behind the retaining rib (10) after the insertion of the plug-in part (3) as well as a connecting sleeve (4) formed on the housing head (1), which connecting sleeve (4) can be inserted into the stepped end of the metal pipeline (6) and can be anchored there together with sealing rings (13) forming a seal against the plug-in part (3), detent means (18, 19) on the housing head (1) being formed for locking a rim (17), bent radially outwards, of the end of the metal pipeline (5), **characterized in that** the sealing rings (13) can be positioned, by means of a supporting sleeve (21), in front of the front end of the connecting sleeve (4) and during the insertion of the connecting sleeve (4) can be inserted into the stepped end (5) of the pipeline (6), while the supporting sleeve (21) is simultaneously pushed over the connecting sleeve (4).

2. Connection unit according to claim 1 with an end, expanded in stages, of a metal pipeline, in which the pipe end has two pipe steps (15 and 16) offset outwards, **characterized in that** the outer diameter of the sealing rings (13) corresponds to the inner diameter (d1) of the inner pipe step (15) and the outer diameter of the supporting sleeve (21) corresponds to the inner diameter d2 of the expanded, front pipe step (16), and that, furthermore, the axial extension of the sealing section corresponds to the inner pipe step (15) and the length of the supporting sleeve (21) corresponds to the depth of the front pipe step (16).

3. Connection unit according to claim 2, **characterized in that** the supporting sleeve (21) has at least two detent stays (22) lying diametrically opposite one another, at the free ends of which detent hooks (23), bevelled in the plug-on direction and directed inwards, are formed which during positioning of the supporting sleeve (21) on the connecting sleeve (4) lock in correspondingly large notches (26) in the outer wall of the connecting sleeve (4) and,-during insertion of the connecting sleeve (4) into the stepped end (5) of the pipeline (6), slide back over the outer wall up to the rear housing head (1) and plunge there into a corresponding encircling groove (27).

4. Connection unit according to one of claims 1 to 3, **characterized in that** the detent means formed on the housing head (4) consist of two wall linings (18) lying diametrically opposite one another, the inner diameter (Hi) of which is equal to the outer diameter (Da) of the rim (17), and that in the wall linings (18), wall linings (19) are formed, projecting inwards and bevelled on the insertion side, the inner diameter (Si) of which is smaller than the outer diameter (Da) of the rim (17), and which end shortly before the housing head (1) with a gap (28), the width (S) of which is somewhat greater than the thickness (d) of the rim (17).

## Revendications

1. Organe d'accouplement d'un raccord rapide débrochable destiné à être monté sur l'extrémité étagée en gradins successifs d'une canalisation métallique, comprenant une tête embrochable femelle de forme cylindrique (1) définissant un logement de réception (2) pour l'emmanchement d'un élément tubulaire embrochable mâle (3) qui, à une certaine distance de l'extrémité du tube, est muni d'une nervure de retenue périphérique (10), un élément de retenue séparé (8) muni d'arêtes d'accrochage (9), capables de se déformer par cédage élastique, orientées dans le plan radial vers le logement de réception, destinées à venir cramponner par derrière la nervure de retenue (10) après l'emmanchement de l'élément embrochable mâle, ainsi qu'une douille de raccordement (4) réalisée solidaire par moulage de la tête embrochable femelle (1) qui, conjointement à des bagues d'étanchéité (13) qui viennent prendre appui de manière étanche sur l'élément embrochable mâle (1), est destinée à être introduite dans l'extrémité étagée en gradins successifs de la canalisation métallique et à être ancrée en position dans cette dernière, des moyens d'accrochage (18, 19) destinés à permettre l'insertion en prise d'encastrement de l'arête périphérique (17), repliée vers l' extérieur dans le plan radial, de l'extrémité (5) de la canalisation métallique étant réalisés solidaires par moulage de la tête embrochable femelle (1), **caractérisé en ce que** les bagues d'étanchéité (13) peuvent être positionnées au moyen d'une douille support (21) devant la face antérieure de la douille de raccordement (4) et introduites en position lors de l'introduction de la douille de raccordement (4) dans l'extrémité étagée en gradins successifs (5) de la canalisation (6), tandis que la douille support (21) peut dans le même temps glisser au-dessus de la douille de raccordement (4).

2. Organe d'accouplement selon la revendication 1, avec l'extrémité progressivement étagée en gradins successifs de diamètre croissant d'une canalisation métallique, l'extrémité du tube comprenant en l'occurrence deux portions à décrochement diamétral (15 et 16), **caractérisé en ce que** le diamètre extérieur des bagues d'étanchéité (13) correspond au diamètre intérieur (d1) de la portion à décrochement diamétral intérieure (15) et le diamètre extérieur de la douille support (21) au diamètre intérieur (d2) de la portion en décrochement antérieure (16) de plus grand diamètre et **en ce qu'**en outre l'étendue axiale de l'ensemble d'étanchéité de la portion à décrochement diamétral (15) et la longueur de la douille support (21) correspondent à la profondeur de la portion à décrochement diamétral antérieure (16).

3. Organe d'accouplement selon la revendication 2, **caractérisé en ce que** la douille support (21) comporte au moins deux nervures d'accrochage (22) diamétralement opposées, des extrémités libres desquelles des crochets d'encliquetage biseautés dans le sens de l'emmanchement (23), orientés vers l'intérieur, sont réalisés solidaires par moulage, crochets qui, pour positionner la douille support (21) sur la douille de raccordement (4), viennent en prise d'encastrement dans des encoches (26) ménagées en correspondance dans la paroi extérieure de la douille de raccordement (4) et lors de l'introduction de la douille de raccordement (4) dans l'extrémité étagée (5) de la canalisation (6) reculent en glissant au-dessus de la paroi extérieure jusqu'à la tête embrochable femelle arrière (1) et viennent s'insérer dans celle-ci dans une nervure périphérique correspondante (27).

4. Organe d'accouplement selon l'une des revendications 1 à 3, **caractérisé en ce que** les moyens d'accrochage réalisés solidaires par moulage de la tête embrochable femelle (1) se composent de deux coquilles périphériques (18) respectivement opposées, dont le diamètre intérieur Hi . est égal au diamètre extérieur Da de l'arête périphérique (17) et **en ce que** dans les coquilles périphériques (18) des coquilles périphériques biseautées sur le côté introduction (19), faisant saillie vers l'intérieur, sont réalisées solidaires par moulage, dont le diamètre intérieur (Si) est plus petit que le diamètre extérieur (Da) de l'arête périphérique (17) et qui se terminent, un peut avant la tête embrochable femelle (1) par un interstice (28), dont la largeur (S) est légèrement supérieure à l'épaisseur (d) de l'arête périphérique (17).
